# EUROPEAN PATENT SPECIFICATION

(11) **EP 0 923 689 B1**
(45) Date of publication and mention of the grant of the patent: **09.05.2001**
(21) Application number: 97939880.7
(22) Date of filing: 03.09.1997
(51) Int. Cl.: F16K 24/04, F16K 17/19

(54) **EQUALIZING VALVE**
AUSGLEICHVENTIL
VANNE D'EGALISATION

(30) Priority: 09.09.1996 BE 9600753
(43) Date of publication of application: 23.06.1999
(73) Proprietor: STRUCTURAL EUROPE N.V., 2200 Herentals (BE)
(72) Inventor: COECKELBERGS, Erik, B-2275 Wechelderzande (BE)
(74) Representative: Callewaert, Jean
(86) International application number: BE9700099
(87) International publication number: WO9811370

(56) References cited:
- EP-A- 0 096 107
- FR-A- 2 394 003
- GB-A- 1 275 350
- US-A- 1 563 472
- US-A- 5 409 033

## Description

The invention concerns a valve for a vessel, into which liquid is filled, and from which liquid is drained off, more specifically for water treatment plants, with a housing, equipped with an inlet and outlet opening and a float, which can move between an open and a closed position under the influence of the prevailing pressure in the vessel, and amongst other things, is intended for the venting of this vessel during the filling of the latter with liquid, and for relieving the underpressure created during the draining off of the liquid.

In existing valves, that are used for the above-mentioned application, the float usually consists of a spherical body or a cylindrical tube as described in US-A-5,409,033, that can close off the inlet and outlet opening in the closed position under the influence of the liquid pressure in the vessel, and can open the inlet and outlet opening when the level of liquid falls.

A particular disadvantage of such a valve is the risk that, during the movement of the float to the closed position during the filling of the liquid tank or vessel, a certain amount of liquid may escape through said opening before the latter is completely closed, or that such a float may prematurely close the opening so that a relatively large amount of air remains trapped in the vessel. This is particularly apparent in the event of a relatively high filling flow rate for the vessel on which such a valve is mounted.

The purpose of the invention is, amongst other things, to overcome this disadvantage, and to propose a valve with a float that reacts very fast to any change in pressure inside the vessel on which it is mounted, while the vessel is being filled or drained, and to achieve this for an extremely wide range of liquid flow rates.

For this purpose, according to the invention, the float in the valve substantially resembles a cylindrical tube closed at one end, that can move back and forth, along its axis, between said open and closed position in a coaxial cylindrical chamber of said housing whose internal diameter is slightly larger than that of the external wall of the tube, so that a passageway with a ring-shaped cross-section is formed between the external wall of the tube and the internal wall of the chamber, whereby the closed end of the tube, in said closed position, closes the inlet and outlet opening provided in the latter, and the opposite open end is located opposite a distribution device for said liquid, that as the vessel is being filled, makes it possible to prevent the liquid from flowing directly into the cavity inside the float, thus ensuring that a bubble of gas is always present inside it.

In a more particular embodiment of the invention, a filter is provided on the side of the distribution device opposite the side that faces the float.

In a preferred embodiment of the invention, the distribution device incorporates a deflection disc that is coaxial with the float and extends a certain distance from the open end of the latter perpendicular to the axis, whereby the diameter of the deflection disc is at least the same as the external diameter of said open end of the float.

The invention also relates to a pressure vessel equipped with a valve as specified above.

In the various drawings, the same reference numbers are used for the same or similar parts.

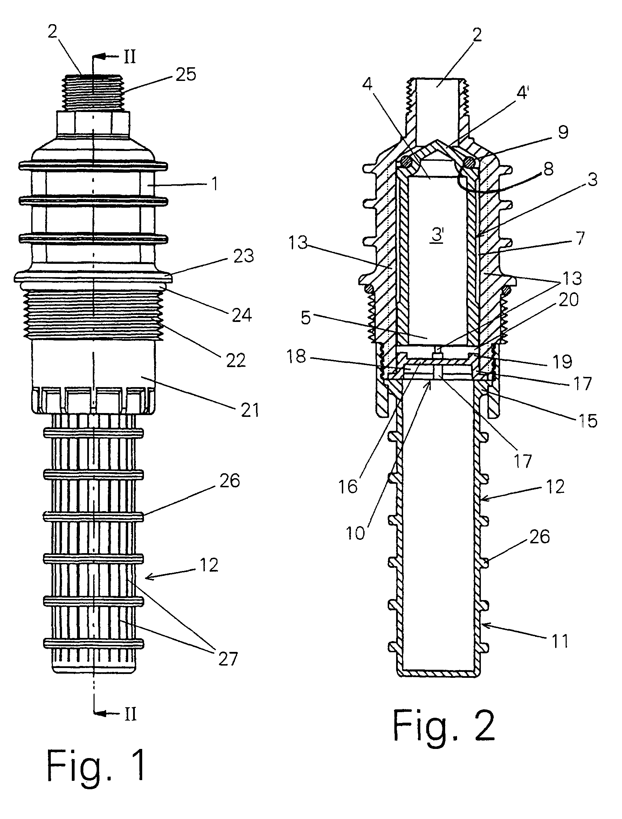

Figure 1 is a frontal view of a particular embodiment of a valve according to the invention.

Figure 2 is an axial cross-section along line II-II in Figure 1.

Figure 3 is a perspective view of the valve according to this particular embodiment showing the constituent parts separately.

Figure 4 is a longitudinal cross-section of the relevant embodiment of the valve according to the invention, while the vessel is being filled.

Figure 5 is similar to Figure 4 and shows the valve while the vessel, on which the valve is mounted, is being drained.

Figure 6 is a larger scale view of the valve in its closed position after the vessel has been completely filled with liquid.

In the various drawings, the same reference numbers are used for the same parts.

The embodiment of the valve according to the invention shown in the figures is intended to be mounted on the top of a vessel into which liquid is filled and from which liquid is drained off, more specifically for water treatment plants.

The valve can be directly screwed into the wall of the vessel or can be connected to it via a pipe fixed to the top of the vessel.

Since this is a mounting procedure already in common use, it has not been shown in the drawings, and only a particular embodiment of the invention has been shown separately.

This valve consists essentially of a housing 1 with an inlet and outlet opening 2 and a float 3 that, in this housing 1, can move between an open and a closed position under the influence of the prevailing pressure in the vessel (not shown). This valve thus enables the vessel to be vented during the filling of the latter with liquid, and also prevents the creation of an underpressure as the liquid is being drained off.

According to the invention, the float 3 consists of a cylindrical tube that is closed at one end 4 by a conical wall 4', and is open at the opposite end 5. This float 3 can move back and forth along its axis between said open and closed position in a coaxial cylindrical chamber 6 of said housing 1, whose inside diameter is slightly larger than the outer diameter of the float 3. In this way, a passageway 7 with a ring-shaped cross-section is formed between this float 3 and the internal wall of the chamber 6, through which gas and liquid can flow.

The closed end 4 of the float 3 is equipped with a ring-shaped cavity 8 for a sealing ring 9 that extends around the conical wall 4' and seals the opening 2 when the float 3 is in the closed position.

A distribution device 10 is located at the opposite open end 5 of the tube which forms the float 3. This distribution device 10 prevents liquid from flowing directly into the tube of the float as the vessel is being filled. In this way, a bubble of gas is always present, even when the passageway 7 is almost completely filled with liquid and said opening is closed by the float.

A filter 11 is located at the side of the distribution device 10 opposite the side that faces the float 3.

This filter 11 has a cylindrical filter wall 12 through which liquid can penetrate and can be deflected by the distribution device 10, essentially towards the passageway 7.

Protruding guide devices are located in the passageway 7, between the float 3 and the internal wall of the chamber 6, in order to allow the float to be guided along its axis in the chamber 6 at a certain distance from said side wall, and in so doing, keeping the size of this passageway constant.

In this particular embodiment, these guiding devices consist of ribs 13 which are provided on the relevant internal wall, and which extend parallel to the axis of the float 3 almost along the entire height of the chamber 6.

The distribution device 10 mainly consists of a flat ring 14, that rests on a collar 15 on the top end of the cylindrical filter 11, and of a deflection disc 16 parallel to this ring and which is kept a certain distance above the ring 14 by four raised pillars 17, so that a slot 18 is formed between the ring 14 and the deflection disc 16. The outer diameter of the deflection disc 16 is almost the same as the internal diameter of the ring 14 which, in turn, is almost identical to the external diameter of the open end 5 of the tubular float 3. In addition, four cylindrical supports 19 are provided in line with the pillars 17, on top of the deflection disc 16, against the edge of the latter. The open end 5 of the float 3 can rest on these supports when the float 3 is in the open position. In that position, a slot 20 is thus formed between the deflection disc 16 and the open end 5 of the float 3.

By means of a threaded ring 21, the filter 11 is mounted removably on the end of the housing 1 that is located opposite where the inlet and outlet opening 2 is provided. The threaded ring 21 also clamps the ring 14 of the distribution device 10 between the lower end of the guide ribs 13 and the collar 15 of the filter. In order to ensure that the distribution device 10 is always correctly positioned, the external diameter of the ring 14 corresponds substantially with that of the internal wall of the chamber 6, and the lower end of the guide ribs 13 extends a certain distance beyond the lower edge of the housing 1, which substantially corresponds with the thickness of this ring 14.

An external screwthread 22 is also provided on the external wall of the housing 1 above the threaded ring 21 with a circular collar 23 above it and a sealing ring 24 between the collar 23 and the screwthread 22.

This screwthread 22 with the collar 23 and the sealing ring 24 between them, are intended to secure the valve to the top of a vessel or to a pipe that is connected to the top of a vessel, as mentioned above.

A screwthread 25 is also provided around the opening 2 which allows the valve, for example, to be connected to a pipe which is not shown.

The entire circumference of the cylindrical filter wall 12 of the filter 11 has a series of axial narrow grooves 27 along which liquid can penetrate the filter 11. The exterior of this wall 12 is equipped with a series of coaxial strengthening ribs 26, at equal distances from each other, whose external diameter is slightly smaller than that of the collar 15 at the top end of the filter so that the threaded ring can be pushed over the filter wall 12 in order to secure the filter via the collar 15 to the housing 1 by means of the threaded ring 21.

The dimensions of the various parts of the valve, according to the invention, can vary significantly and depend, amongst other things, on the type of liquid to be stored in the tank, as well as on the flow rate during filling and draining off of the liquid.

It has thus been determined that, for water treatment plants requiring a filling flow rate of between 12 and 46 m³/hour and a draining off flow rate of between 36 and 56 m³/hour, extremely good results were obtained using a valve with a float consisting of a 60 mm tube, with an internal diameter of 20 mm and an external diameter of 26 mm, with a housing whose internal wall has a diameter of approximately 30 mm, and with a filter whose grooves 27 are approximately 0.2 mm wide.

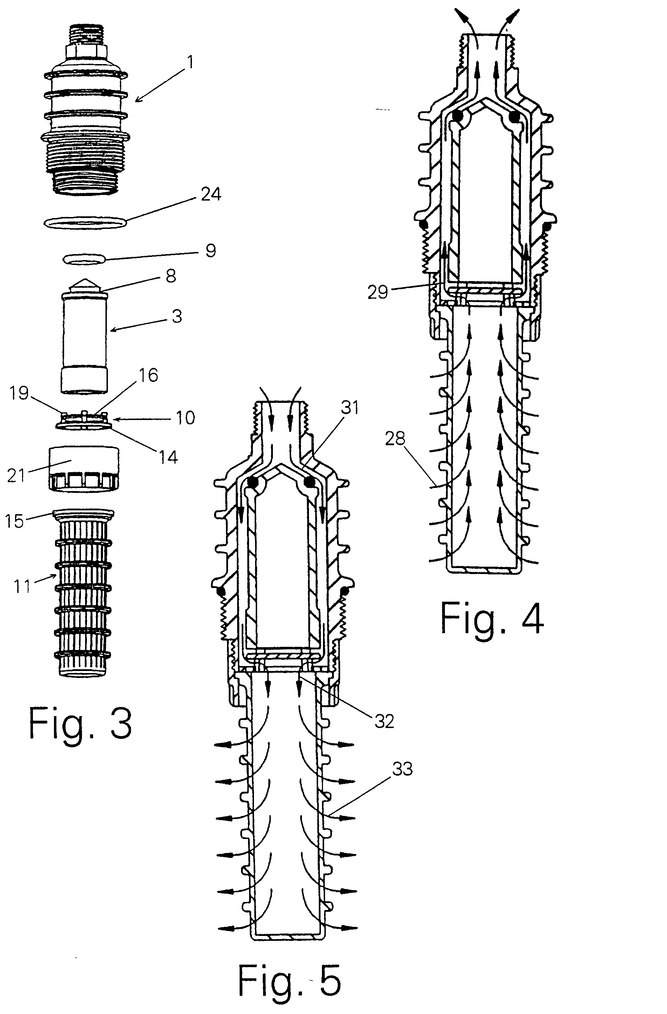

For the operation of the relevant valve, refer to enclosed figures 4 to 6.

Figure 4 shows the valve in operation while the vessel is being filled.

In a first step, the air present in the vessel is led via the narrow grooves 27 in the filter wall 12 of the filter 11, as shown by the arrows 28, and is then deflected through the groove 18 of the distribution device 10, and routed along the ring-shaped passageway 7 to the opening 2.

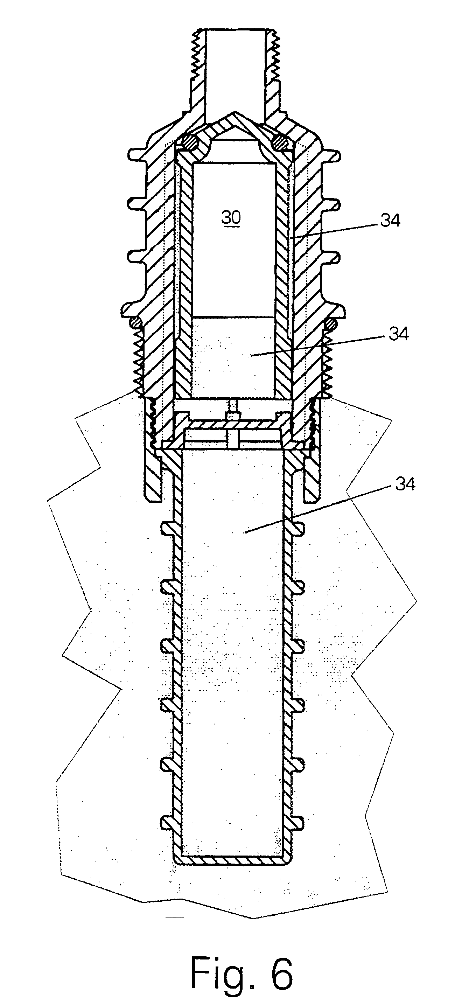

At the moment when the liquid reaches the filter, it penetrates the filter wall 12, in the same manner, and then subsequently rises within the filter, up to the distribution device 10, where the liquid is deflected essentially by the disc 16 into the passageway 7. At the same time, part of this liquid penetrates the cavity 3' inside the float where the air present is partly compressed so that the float is moved upwards until it reaches the closed position, as shown in figure 6.

In this position, the passageway 7 is thus substantially filled with liquid 34, i.e. almost all of the air has been removed from the vessel, with the exception of the air bubble 30 that is constantly present in the cavity 3' inside the float.

During the draining off of liquid from the vessel, which causes the liquid level in the vessel to drop, the pressure above that level is reduced, generating a downward force on the closed end 4 of the float 3 which moves the latter to the open position, as shown in figure 5.

This thus results in air penetrating the passageway 7, as shown by the arrows 31, before subsequently being deflected beneath the float 9 by the distribution device 10 towards the filter 11, as shown by the arrows 32, in order to exit via the narrow grooves 27 in the filter wall 12. This ensures that the vacuum created during the draining off of the liquid from the vessel is broken.

According to the invention, the valve operates completely automatically during the venting as well as during the breaking of the vacuum.

During the start-up phase, i.e. when the vessel is completely empty, the float will, due to its own weight, rest on the supports 19 of the distribution device 10. During the filling of the vessel with liquid, the air will thus gradually flow away via the open opening 2. When the liquid reaches the level of the float, a pressure will be exerted on the liquid present in the cavity 3' of the float, and this will gradually close until it reaches its closed position when the passageway 7 is completely full of liquid. As long as the vessel remains under pressure, the valve will remain closed.

When a underpressure or vacuum exists, the float will be sucked towards the distribution device 10, thus allowing air to flow freely into the vessel.

A particular characteristic of the valve according to the invention is that the distribution device 10 guarantees, on the one hand, perfect guiding of the airflow, whereby relatively high flow rates can flow through the valve without it closing, and, on the other hand, that an air bubble 30 is always present inside the float. This means that the float can react to any change in pressure within the vessel and can immediately close at the moment when the passageway 7 is completely full of liquid. Moreover, a high air flow can occur through the passageway 7 to the opening 2 without the float moving, so that this does not prematurely close the valve, i.e. before almost all of the air has been removed from the passageway 7; this can occur without any liquid escaping.

A particular characteristic of the invention is thus that, thanks to the geometry, dimensions and weight of the float, as well as the shape of the internal wall of the housing in which it is mounted, a perfect laminar flow is always achieved for the air as well as for the liquid during the venting of the vessel.

The valve, according to the invention, is designed so that it can be manufactured entirely from plastic (e.g. polypropylene or PVBF), using tried and tested injection-moulding technology.

The invention is of course not solely limited to that described above and to the embodiment shown in the figures, and other variants can be considered within the scope of the invention. Moreover, the valve is not only intended to be mounted in pressure vessels, but can also for example be installed in pipes through which gas and liquid flow alternately.

## Claims

1. Valve for a vessel, which is fillable with a liquid, and from which a liquid is drained off, more specifically for water treatment plants, with a housing (1), equipped with an inlet and outlet opening (2) and a float (3), which can move between an open and a closed position under the influence of the prevailing pressure in the vessel, and intended amongst other things for the venting of this vessel during the filling of the latter with liquid, and for relieving the underpressure created during the draining off of liquid, whereby the float (3) has substantially the form of a cylindrical tube closed at one end (4), that can move back and forth, along its axis, between said open and closed position in a coaxial cylindrical chamber (6) of said housing (1) of which the internal diameter is slightly larger than that of the external wall of the float (3), characterised in that a passageway (7) with a substantially ring-shaped cross-section is provided between the external wall of the float (3) and the internal wall of this chamber (6), whereby the closed end (4) of this float (3), in said closed position, closes the inlet and outlet opening (2) provided in the latter, and the opposite open end (5) is located opposite a distribution device (10) for said liquid, which during the filling of the vessel with liquid, prevents the latter from flowing directly into the cavity (8) inside the float (3), thus ensuring that a gas bubble (30) is always present inside it.

2. Valve, according to claim 1, characterised in that filter (11) is provided on the side of the distribution device (10) opposite the side that faces the float (3).

3. Valve, according to claim 2, characterised in that the filter (11) contains a cylindrical body with a filter wall (12) through which liquid from outside can flow into this body, and via the distribution device (10), can reach the passageway (7) between the float (3) and the internal wall of the chamber (6) in which this is mounted.

4. Valve, according to one of claims 1 to 3, characterised in that protruding guide devices (13) are provided for the float (3) in the passageway (7), between the float (3) and the internal wall of the chamber (6).

5. Valve, according to one of claims 1 to 4, characterised in that distribution device (10) contains a deflection disc (16) that is coaxial with the float (3) and extends a certain distance from the open end (5) of the latter perpendicular to the axis, whereby the diameter of the deflection disc (16) is at least the same as the external diameter of said open end (5) of the float (3).

6. Valve, according to one of claims 2 to 5 inclusive, characterised in that, by means of a threaded ring (21), the filter (11) is mounted so that it can be removed from the housing (1).

7. Valve, according to claim 6, characterised in that the distribution device (10) is clamped by means of said threaded ring (21) between the housing (1) and the filter (11).

8. Pressure vessel equipped with a valve according to one of claims 1 to 7.

## Patentansprüche

1. Ventil für einen Kessel, welcher mit einer Flüssigkeit befüllbar ist und von welchem Flüssigkeit abgezogen wird, insbesondere für Wasseraufbereitungsanlagen, mit einem Gehäuse (1), welches mit einer Ein- und Auslaßöffnung (2) und einem Schwimmer (3), welcher sich zwischen einer offenen und einer geschlossenen Position unter dem Einfluß des vorherrschenden Drucks im Kessel bewegen kann, ausgestattet ist, und unter anderem für den Ausgleich dieses Kessels während des Befüllens von letzterem mit Flüssigkeit, und für den Ausgleich des Unterdrucks, welcher während des Abziehens der Flüssigkeit gebildet wird, vorgesehen ist, wobei der Schwimmer (3) im wesentlichen die Gestalt eines zylindrischen Rohres aufweist, welches an einem Ende (4) geschlossen ist, welches sich entlang seiner Achse zwischen der genannten offenen und geschlossenen Position in einer koaxialen zylindrischen Kammer (6) des genannten Gehäuses (1), dessen Innendurchmesser geringfügig größer als jener der Außenwandung des Schwimmers (3) ist, zurück und vor bewegen kann, **dadurch gekennzeichnet,** daß ein Durchlaß (7) mit einem im wesentlichen ringförmigen Querschnitt zwischen der Außenwandung des Schwimmers (3) und der Innenwandung dieser Kammer (6) beigestellt ist, wobei das geschlossene Ende (4) dieses Schwimmers (3) in der genannten geschlossenen Position die Ein- und Auslaßöffnung (2), welche in letzterer beigestellt ist, verschließt und das gegenüberliegende offene Ende (5) gegenüber einer Verteilungsvorrichtung (10) für die genannte Flüssigkeit angeordnet ist, welche während des Befüllens des Kessels mit Flüssigkeit letztere daran hindert, direkt in den Hohlraum (8) innerhalb des Schwimmers (3) zu strömen, und daher gewährleistet, daß in seinem Inneren immer eine Gasblase (30) vorhanden ist.

2. Ventil gemäß Anspruch 1, **dadurch gekennzeichnet,** daß ein Filter (11) an der Seite der Verteilungsvorrichtung (10) vorgesehen ist, welche der Seite gegenüberliegt, die dem Schwimmer (3) zugewandt ist.

3. Ventil gemäß Anspruch 2, **dadurch gekennzeichnet,** daß der Filter (11) einen zylindrischen Körper mit einer Filterwandung (12) enthält, durch welche Flüssigkeit von außerhalb in diesen Körper strömen kann, und über die Verteilungsvorrichtung (10) den Durchlaß (7) zwischen dem Schwimmer (3) und der Innenwandung der Kammer (6), in welcher dieser montiert ist, erreichen kann.

4. Ventil gemäß einem der Ansprüche 1 bis 3, **dadurch gekennzeichnet,** daß vorstehende Führungsvorrichtungen (13) für den Schwimmer (3) im Durchlaß (7) zwischen dem Schwimmer (3) und der Innenwandung der Kammer (6) vorgesehen sind.

5. Ventil gemäß einem der Ansprüche 1 bis 4, **dadurch gekennzeichnet,** daß die Verteilungsvorrichtung (10) eine Ablenkungsscheibe (16) enthält, welche koaxial mit dem Schwimmer (3) ist und sich in einem bestimmten Abstand von dem offenen Ende (5) des letzteren im rechten Winkel zur Achse erstreckt, wobei der Durchmesser der Ablenkungsscheibe (16) mindestens der gleiche wie der Außendurchmesser des genannten offenen Endes (5) des Schwimmers (3) ist.

6. Ventil gemäß eines der Ansprüche 2 bis einschließlich 5, **dadurch gekennzeichnet,** daß der Filter (11) mittels eines Gewinderings (21) montiert ist, sodaß er vom Gehäuse (1) abgenommen werden kann.

7. Ventil gemäß Anspruch 6, **dadurch gekennzeichnet,** daß die Verteilungsvorrichtung (10) mittels des genannten Gewinderings (21) zwischen dem Gehäuse (1) und dem Filter (11) festgeklemmt ist.

8. Druckkessel, welcher mit einem Ventil gemäß einem der Ansprüche 1 bis 7 ausgestattet ist.

## Revendications

1. Soupape pour un réservoir, qu'on peut remplir avec du liquide et duquel un liquide est vidangé, plus spécifiquement pour des installations de traitement de l'eau, avec un corps (1) équipé d'une ouverture d'entrée et de sortie (2) et d'un flotteur (3) qui peut se déplacer entre une position ouverte et fermée sous l'influence de la pression prévalant dans le réservoir, et qui est notamment destinée à purger ce réservoir pendant le remplissage de ce dernier avec le liquide, et à détendre la sous-pression créée pendant la vidange du liquide, ce qui fait que le flotteur (3) a essentiellement la forme d'un tube cylindrique fermé à une extrémité (4) qui peut glisser le long de son axe entre ladite position ouverte et fermée dans une chambre coaxiale cylindrique (6) dudit corps (1) dont le diamètre interne est légèrement plus grand que celui de la paroi externe du flotteur (3), caractérisée en ce qu'un passage (7) à section transversale essentiellement en forme d'anneau est prévue entre la paroi externe du flotteur (3) et la paroi interne de cette chambre (6), ce qui fait que l'extrémité fermée (4) de ce flotteur(3), dans ladite position fermée, ferme l'ouverture d'entrée et de sortie (2) prévue dans ce dernier et l'extrémité fermée opposée (5) est située à l'opposé d'un dispositif de distribution (10) dudit liquide, qui, pendant le remplissage du réservoir avec du liquide, empêche ce dernier de s'écouler directement dans la cavité (8) à l'intérieur du flotteur (3), assurant ainsi qu'une bulle de gaz (30) soit toujours présente à l'intérieur de celui-ci.

2. Soupape suivant la revendication 1, caractérisée en ce que le filtre (11) est prévu du côté du dispositif de distribution (10) à l'opposé du côté qui fait face au flotteur (3).

3. Soupape suivant la revendication 2, caractérisée en ce que le filtre (11) contient un corps cylindrique doté d'une paroi de filtre (12) par laquelle peut s'écouler dans ce corps du liquide de l'extérieur et, par l'intermédiaire du dispositif de distribution (10), peut atteindre le passage (7) entre le flotteur (3) et la paroi interne de la chambre (6) sur laquelle il est monté.

4. Soupape suivant les revendications 1 à 3, caractérisée en ce que des dispositifs de guidage saillants (13) sont prévus pour le flotteur (3) dans le passage (7) entre le flotteur (3) et la paroi interne de la chambre (6).

5. Soupape suivant l'une des revendications 1 à 4, caractérisée en ce que le dispositif de distribution (10) contient un disque de déflexion (16) qui est coaxial avec le flotteur (3) et s'étend sur une certaine distance depuis l'extrémité ouverte (5) de ce dernier d'une manière perpendiculaire à l'axe, ce qui fait que le diamètre du disque de déflexion (16) est au moins identique au diamètre externe de ladite extrémité ouverte (5) du flotteur (3).

6. Soupape suivant l'une des revendications 2 à 5 incluse, caractérisée en ce qu'au moyen d'une anneau fileté (21), le filtre (11) est monté de sorte qu'il peut être enlevé du corps (1).

7. Soupape suivant la revendication 6, caractérisée en ce que le dispositif de distribution (10) est serré au moyen dudit anneau fileté (21) entre le corps (1) et le filtre (11).

8. Réservoir sous pression, équipé d'une soupape suivant l'une des revendications 1 à 7.
